Europäisches Patentamt

European Patent Office

Office européen des brevets

(11) Veröffentlichungsnummer: **0 092 506**
A1

# EUROPÄISCHE PATENTANMELDUNG

(21) Anmeldenummer: 83730038.3

(22) Anmeldetag: 13.04.83

(51) Int. Cl.³: **B 65 G 47/50**, B 65 G 51/46

(30) Priorität: **21.04.82 DE 3215300**

(43) Veröffentlichungstag der Anmeldung: **26.10.83**
**Patentblatt 83/43**

(84) Benannte Vertragsstaaten: **AT CH DE FR GB LI**

(71) Anmelder: **SIEMENS AKTIENGESELLSCHAFT, Berlin und München Wittelsbacherplatz 2, D-8000 München 2 (DE)**

(72) Erfinder: **Dziggel, Klaus-Peter, Ing. (grad.), Küsterstrasse 18, D-1000 Berlin 20 (DE)**
Erfinder: **Rowe, Kenneth, 37, Arminers Close, Gosport Hants PO 12 1BG (GB)**

(54) **Förderanlage mit unter dem Steuereinfluss einer zentralen Steuereinrichtung stehenden Zielwahleinrichtungen zur Einstellung vom Zielen abzusendender Förderbehälter.**

(57) In der zentralen Steuereinrichtung (Z) ist jeder Sende- und Empfangsstation ein individueller Speicher (S1 ... Sn) zugeordnet, der bei jedem Absendevorgang bzw. Empfangsvorgang an der entsprechenden Station dekrementiert bzw. inkrementiert wird. Die Zuführung leerer Behälter zu den Stationen erfolgt unter Berücksichtigung des Defizits der Speicherwerte gegenüber einer Ausgangssituation.

Die Erfindung kann insbesondere für Rohrpostanlagen eingesetzt werden.

SIEMENS AKTIENGESELLSCHAFT
Berlin und München

Unser Zeichen
VPA 82 P 4057 E

Förderanlage mit unter dem Steuereinfluß einer zentralen
Steuereinrichtung stehenden Zielwahleinrichtungen zur Einstellung von Zielen abzusendender Förderbehälter

Die Erfindung betrifft eine Förderanlage mit Sende- und
Empfangsstationen, die Zielwahleinrichtungen zur Einstellung von Zielen abzusendender Förderbehälter aufweisen und
unter dem Steuereinfluß einer zentralen Steuereinrichtung
stehen.

In solchen Förderanlagen besteht im allgemeinen die Notwendigkeit, an jeder Sendestation eine für die jeweiligen
Bedürfnisse der Station ausreichende Zahl von leeren Förderbehältern zur Verfügung zu stellen. Da an vielen Sende-
und Empfangsstationen die Zahl der abgesendeten Förderbehälter nicht mit der der empfangenen Förderbehälter übereinstimmt, müssen bestimmte Maßnahmen ergriffen werden, um
manche Sende- und Empfangsstationen mit leeren Förderbebehältern zu versorgen und von anderen Sende- und Empfangsstationen leere Förderbehälter abzunehmen. Dies kann
beispielsweise durch einen zentralen Speicher für leere
Förderbehälter erreicht werden, an den alle an bestimmten
Sende- und Empfangsstationen nicht benötigten bzw. im
Überfluß vorhandenen leeren Förderbehälter gesandt werden
und von dem leere Förderbehälter an solche Sende- und
Empfangsstationen abgegeben werden, die in bestimmten
Zeiträumen mehr Sendevorgänge als Empfangsvorgänge
durchführen.

Je größer die Zahl der Sende- und Empfangsstationen mit
einer ausgeprägten Diskrepanz zwischen Sendevolumen und
Empfangsvolumen ist, desto stärker wird die gesamte För-

Om 3 Sz / 21.04.1982

deranlage durch den Transport von solchen leeren Förderbehältern belastet. Dies ist insbesondere dann als gravierend anzusehen, wenn - wie beispielsweise in Rohrpostanlagen - in der Förderanlage oder in·definierten Teilbereichen derselben jeweils nur eine begrenzte Anzahl von
Förderbehältern bzw. nur ein einziger Förderbehälter verkehren kann.

Die der Erfindung zugrunde liegende Aufgabe besteht darin,
die Einschränkung der Verkehrsleistung der eingangs definierten Förderanlage durch den Transport von Leerbehältern
zu erhöhen. Dies wird erfindungsgemäß dadurch erreicht, daß
in der zentralen Steuereinrichtung jeder Sende- und Empfangsstation ein individueller Speicher zugeordnet ist, der bei
jedem Absenden eines Förderbehälters von der entsprechenden
Sende- und Empfangsstation dekrementiert und bei jedem
Empfang eines Förderbehälters an der entsprechenden Sende-
und Empfangsstation inkrementiert wird und daß eine Prüf-
und Einstelleinrichtung derart ausgelegt ist, daß bei jedem
Absenden eines leeren Förderbehälters mittels Einstellen
eines festgelegten Leerbehälterziels das Defizit der Speicher gegenüber einer Ausgangssituation ermittelt und das
Leerbehälterziel in ein Ziel einer einem Speicher mit Defizit zugeordneten Station umgesetzt wird.

Der wesentliche Vorteil der Erfindung ist darin zu sehen,
daß nicht jeder an einer Sende- und Empfangsstation nicht
benötigte leere Förderbehälter in einen zentralen Leerbehälterspeicher überführt wird bzw. nicht jeder von einer
Sende- und Empfangsstation angeforderte leere Förderbehälter von dem zentralen Leerbehälterspeicher angefordert
wird, sondern daß die leeren Förderbehälter direkt von einer
Sende- und Empfangsstation mit überzähligen leeren Förderbehältern an eine derartige Station mit einem Defizit an
leeren Förderbehältern übersandt werden. Dies wird zugleich mit besonders einfachen schaltungstechnischen Mitteln erreicht, da jeder Station in der zentralen Steuereinrichtung
lediglich ein individueller Speicher zugeordnet sein muß,
dessen jeweiliger Zählerstand entscheidend dafür ist, welche
Sende- und Empfangsstation einen in die Förderanlage eingeschleusten leeren Förderbehälter erhält.

Dabei kann bevorzugt derart vorgegangen werden, daß jeweils
der Speicher mit dem höchsten Defizit des Zählerstandes ermittelt wird. Um die Fahrwege der in die Förderanlage eingeschleusten leeren Förderbehälter bis zu der ausgewählten
Sende- und Empfangsstation möglichst kurz zu halten und
damit die Verkehrsleistung der Anlage weiter zu verbessern,
sieht eine vorteilhafte Weiterbildung der Erfindung vor, daß
die Speicher mehrerer benachbarter Sende- und Empfangsstationen derart zusammengefaßt sind, daß die Prüf- und Einstelleinrichtung bei Absenden eines Förderbehälters von einer
dieser Sende- und Empfangsstationen mit Vorrang einen ebenfalls einer dieser Sende- und Empfangsstationen zugeordneten
defizitären Speicher auswählt. Der in die Förderanlage eingeschleuste leere Förderbehälter wird also bevorzugt einer
benachbarten Sende- und Empfangsstation mit einem Defizit an
leeren Förderbehältern zugeführt.

Eine schaltungstechnisch besonders einfache Ausgestaltung einerseits der den Sende- und Empfangsstationen individuell zugeordneten Speicher und andererseits der Prüf- und Einstelleinrichtung ergibt sich durch eine vorteilhafte Ausgestaltung der Erfindung, gemäß der in der Ausgangssituation alle
Speicher auf denselben Zählwert eingestellt sind. Damit
braucht nicht jeweils individuell ein Zählwert mit einem
gespeicherten Festwert verglichen werden.

Um die Benutzer der Förderanlage nicht unnötig bei Empfang
von leeren Förderbehältern - die von ihnen nicht angefordert sind - zur Aufmerksamkeit zu veranlassen, kann die zentrale Steuereinrichtung derart aufgebaut bzw. gesteuert sein, daß eine Anzeige der Leerbehältersendung an der Empfangsstation unterdrückt ist. Jede Umwertung eines Leerbehälterziels wird demgemäß dazu ausgenutzt, an der ausgewählten Sende- und Empfangsstation befindliche Anzeigeelemente unwirksam zu schalten.

Die Erfindung wird im folgenden anhand eines schematisch dargestellten Ausführungsbeispiels erläutert.

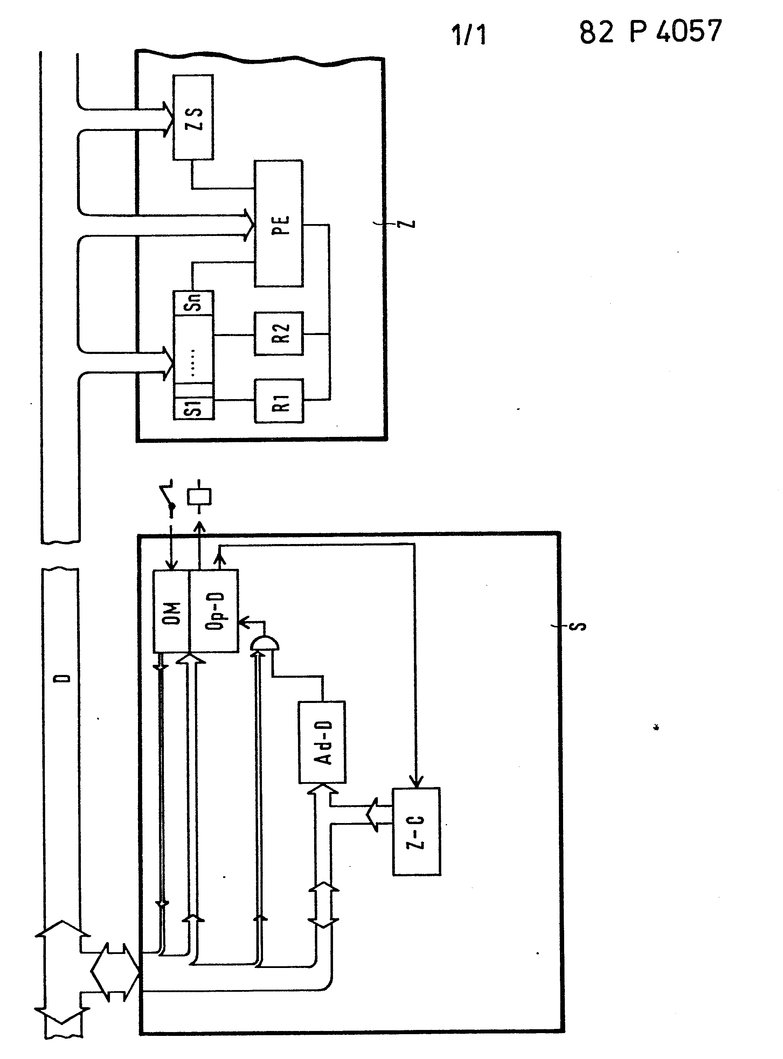

In der Figur ist das Signalflußschema innerhalb eines einer Sende- und Empfangsstation zugeordneten Steuersatzes S, innerhalb eines Teils einer zentralen Steuereinrichtung Z sowie zwischen dem Steuersatz S und der zentralen Steuereinrichtung Z schematisch dargestellt.

Die Steuersätze S aller Sende- und Empfangsstationen sind an einen Datenbus D angeschlossen, der die Verbindung zur zentralen Steuereinrichtung Z herstellt. Über den Datenbus D werden Adresseninformationen übertragen, die von Adressendecodern Ad-D erkannt und zur Voreinstellung von Operationsdecodern Op-D benutzt werden. Über den Datenbus D werden dann Operationsbefehle übertragen, die von dem Steuersatz S, der die an den Datenbus D angelegte Adresse individuell aufweist, mittels des Operationsdecoders Op-D verarbeitet werden. Die Verarbeitung wird über einen Quittungsmultiplexer QM ebenfalls über den Datenbus D an die zentrale Steuereinrichtung Z rückübertragen.

In gleicher Weise erfolgt die Übergabe von Zielinformationen mittels einer Zielcodiereinrichtung Z-C.

Innerhalb der zentralen Steuereinrichtung Z sind nur die Bestandteile dargestellt, die für die Steuerung des Leerbehälter-Transports von Bedeutung sind. Bei jedem Senden eines Förderbehälters von einer Station zu einer anderen, wird mit Hilfe einer Prüf- und Einstelleinrichtung PE das in einer Zielspeichereinrichtung ZS gespeicherte Ziel der Empfangsstation und das mittels des Adressendecoders Ad-D bzw. des Quittungsmultiplexers QM im Steuersatz S der absendenden Station festgelegte Kennzeichen der Sendestation zur Inkrementierung bzw. Dekrementierung der Speicher S1 ... Sn umgewertet, die der Sende- bzw. der Empfangsstation zugeordnet sind.

Wird mit der Zielcodiereinrichtung Z-C des Steuersatzes S einer der Sende- und Empfangsstationen ein festgelegtes Leerbehälter-Zielkennzeichen eingegeben, so führt dies über den Zielspeicher ZS in der zentralen Steuereinrichtung Z zu einem Anreiz an die Prüf- und Einstelleinrichtung PE, die daraufhin sämtliche Speicherplätze S1 ... Sn mit Hilfe zweier Register R1, R2 daraufhin überprüft, welcher Speicherplatz das größte Defizit gegenüber einem die Ausgangssituation darstellenden Festwert aufweist. Nach Ermittlung dieses Speichers wird das Leerbehälterziel in eine Zielinformation für die zugehörige Sende- und Empfangsstation umgewertet und zur Einleitung der Übersendung des leeren Behälters an diese Station die entsprechende Adresse an den Datenbus D angelegt.

1 Figur
4 Patentansprüche

Patentansprüche

1. Förderanlage mit Sende- und Empfangsstationen, die Zielwahleinrichtungen zur Einstellung von Zielen abzusendender Förderbehälter aufweisen und unter dem Steuereinfluß einer zentralen Steuereinrichtung stehen , d a d u r c h   g e - k e n n z e i c h n e t , daß in der zentralen Steuereinrichtung (Z) jeder Sende- und Empfangsstation ein individueller Speicher (S1 ... Sn) zugeordnet ist, der bei jedem Absenden eines Förderbehälters von der entsprechenden Sende- und Empfangsstation dekrementiert und bei jedem Empfang eines Förderbehälters an der entsprechenden Sende- und Empfangsstation inkrementiert wird und daß eine Prüf- und Einstelleinrichtung (PE) derart ausgelegt ist, daß bei jedem Absenden eines leeren Förderbehälters mittels Einstellen eines festgelegten Leerbehälterziels das Defizit der Speicher (S1 ... Sn) gegenüber einer Ausgangssituation ermittelt und das Leerbehälter-Ziel in ein Ziel einer einem Speicher (S1 ... Sn) mit Defizit zugeordneten Station umgesetzt wird.

2. Förderanlage nach Anspruch 1 , d a d u r c h   g e - k e n n z e i c h n e t , daß in der Ausgangssituation alle Speicher auf denselben Zählwert eingestellt sind.

3. Förderanlage nach Anspruch 1 oder 2 , d a d u r c h   g e k e n n z e i c h n e t , daß die Speicher (S1 ... Sn) mehrerer benachbarter Sende- und Empfangsstationen derart zusammengefaßt sind, daß die Prüf- und Einstelleinrichtung (PE) bei Absenden eines Förderbehälters von einer dieser Sende- und Empfangsstationen mit Vorrang einen ebenfalls einer dieser Sende- und Empfangsstationen zugeordneten Speicher (S1 ... Sn) mit Defizit auswählt.

4. Förderanlage nach einem der Ansprüche 1 bis 3 ,
d a d u r c h   g e k e n n z e i c h n e t , daß eine Anzeige der Leerbehältersendung an der Empfangsstation unterdrückt ist.

82 P 4057

0092506

**Europäisches Patentamt**

## EUROPÄISCHER RECHERCHENBERICHT

Nummer der Anmeldung

EP 83 73 0038

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 908 113 (MAXHAM) * Spalte 11, Zeilen 9-42; Spalte 12, Zeilen 1-29; Figur 9 * | 1 | B 65 G 47/50 B 65 G 51/46 |
| A | TELCOM REPORT, Band 5, Nr. 2, 21. April 1982, Seiten 87-91, Passau, DE. H.J. KARDINAL: "Rohrpostsystem SIMACOM 100 MC - ein Akten- und Materialverteilungssystem mit programmierter Funktionssicherheit" * Seite 91, Spalte 2, letzter Absatz * | 1 | |
| A | DE-A-2 302 959 (LINDER) * Seite 30, Zeilen 18-21; Seite 32, Zeilen 25-28; Seite 33; Seite 34 * | 1 | |
| A | DE-B-2 111 934 (LINDER) * Spalte 7, Zeilen 5-9; Spalte 38, Zeilen 53-68; Spalte 39, Zeilen 1-25 * --- -/- | 1 | RECHERCHIERTE SACHGEBIETE (Int. Cl. ³) B 65 G G 06 F B 61 L |

Der vorliegende Recherchenbericht wurde für alle Patentansprüche erstellt.

| Recherchenort DEN HAAG | Abschlußdatum der Recherche 11-07-1983 | Prüfer OSTYN T.J.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | STEUERUNGSTECHNIK, Band 5, Nr. 9/10, September-Oktober 1972, Seiten 211-216 GEISSLREITHER: "Steuerung von fahrerlosen Transportsystemen" * Seite 211, Spalte 2, Zeilen 19-22; Seite 215, Spalte 3, Zeilen 2-19; Seite 215, Spalte 3, Zeilen 59-64; Seite 216, Paragraph 9.5: "Zentrale Steuerung für die Transportoptimierung" * --- | 1 | |
| A | FR-A-2 085 281 (SPIC) * Seite 3, Zeilen 17-37; Figur 4 * --- | 1 | |
| A | DE-A-3 023 569 (SIEMENS) * Patentanspruch 1 * --- | 4 | |
| A | US-A-3 227 096 (GORJANC) ----- | | |

RECHERCHIERTE SACHGEBIETE (Int. Cl. ³)

Der vorliegende Recherchenbericht wurde für alle Patentansprüche erstellt.

| Recherchenort DEN HAAG | Abschlußdatum der Recherche 11-07-1983 | Prüfer OSTYN T.J.M. |
|---|---|---|